# EUROPÄISCHE PATENTSCHRIFT

(11) **EP 3 123 129 B1**
(45) Veröffentlichungstag und Bekanntmachung des Hinweises auf die Patenterteilung: **09.09.2020**
(21) Anmeldenummer: 15717100.0
(22) Anmeldetag: 11.03.2015
(51) Int. Cl.: G01J 3/50, G01J 1/02

(54) **VERFAHREN UND GONIORADIOMETER ZUR RICHTUNGSABHÄNGIGEN MESSUNG MINDESTENS EINER LICHTTECHNISCHEN ODER RADIOMETRISCHEN KENNGRÖSSE EINER OPTISCHEN STRAHLUNGSQUELLE**
METHOD AND GONIORADIOMETER FOR THE DIRECTION-DEPENDENT MEASUREMENT OF AT LEAST ONE LIGHTING OR RADIOMETRIC CHARACTERISTIC QUANTITY OF AN OPTICAL RADIATION SOURCE
PROCÉDÉ ET GONIORADIOMÈTRE DE MESURE DIRECTIONNELLE D'AU MOINS UN PARAMÈTRE PHOTOMÉTRIQUE OU RADIOMÉTRIQUE D'UNE SOURCE DE RAYONNEMENT OPTIQUE

(30) Priorität: 24.03.2014 DE 102014205430
(43) Veröffentlichungstag der Anmeldung: 01.02.2017
(73) Patentinhaber: LMT Lichtmesstechnik GmbH Berlin, 10587 Berlin (DE)
(72) Erfinder: DIEM, Carsten, 13505 Berlin (DE); REINERS, Thomas, 10589 Berlin (DE); SOROWKA, Dieter, 10625 Berlin (DE); RADEWALD, Konstantin, 14089 Berlin (DE); LANGE, Peter, 13156 Berlin (DE)
(74) Vertreter: Müller, Wolfram Hubertus
(86) Internationale Anmeldenummer: PCT/EP2015/055011
(87) Internationale Veröffentlichungsnummer: WO 2015/144431

(56) Entgegenhaltungen:
- DE-A1-102004 037 355
- Wolfgang Patelay: "Robots automate goniophotometer characterization of LED systems", LEDs Magazine: Online article, 8. Oktober 2013 (2013-10-08), Seiten 1-7, XP055201579, Gefunden im Internet: URL:http://www.ledsmagazine.com/articles/2 013/10/robots-automate-goniophotometer-cha racterization-of-led-systems.html [gefunden am 2015-07-10]
- Opsira Gmbh: "robogonio - Schnell. Präzise. Hochflexibel", , 5 December 2016 (2016-12-05), pages 1-17, XP055416629, Weingarten, Germany Retrieved from the Internet: URL:http://www.opsira.de/fileadmin/benutze rdaten/opsira-de/pdf/Techn_Datenblatt_robo gonio_Goniophotometer_-_D_-_V00293616_-_op sira.pdf [retrieved on 2017-10-18]

## Beschreibung

Die Erfindung betrifft ein Verfahren und ein Gonioradiometer zur richtungsabhängigen Messung mindestens einer lichttechnischen oder radiometrischen Kenngröße einer optischen Strahlungsquelle.

Für die Messung von lichttechnischen oder radiometrischen Kenngrößen von Lampen und Leuchten werden üblicherweise Gonioradiometer verwendet. Dabei handelt es sich um mechanisch-optische Messsysteme, mit denen die Richtungsabhängigkeit von Größen zur Beschreibung optischer Strahlung bestimmbar ist. Beispielsweise können je nach verwendetem Sensor oder Messgerätekopf die Lichtstärkeverteilung oder der Farbverteilungskörper einer Lichtquelle bestimmt werden. Die Licht- oder Strahlungsquelle ist mit ihrem Lichtschwerpunkt im Zentrum des Gonioradiometers und dabei im Koordinatenursprung eines Kugel-Koordinatensystems angeordnet. Messwerte einer lichttechnischen oder radiometrischen Kenngröße können für diesen Fall goniometrisch, d. h. für alle Richtungen, durch Bewegen der Licht- oder Strahlungsquelle oder durch Bewegen des Sensors nacheinander in verschiedenen Winkelbereichen gemessen werden.

Durch Auswertung einzelner Richtungen und/oder durch die Integration der Messergebnisse über Teilbereiche oder den gesamten Raumwinkel eines Verteilungskörpers ergeben sich die lichttechnischen oder radiometrischen Kenngrößen für die Quelle.

Eine lichttechnische oder radiometrische Kenngröße wie z.B. die Lichtstärke ist eine richtungsabhängige Größe, deren Ausstrahlungsrichtung allgemein durch zwei Winkel in einem mit der Lichtquelle verbundenem Koordinatensystem angegeben werden kann. In der Praxis hat sich die Beschreibung durch bestimmte Ebenensysteme durchgesetzt, die als A-Ebenen, B-Ebenen und C-Ebenen bezeichnet werden. Diese Ebenen sind in der Norm DIN 5032 Teil 1 (1999) definiert. Eine entsprechende Definition befindet sich auch in dem Dokument CIE No 70 (1987): "The measurement of absolute luminous intensity distributions", Central Bureau of the CIE, ISBN 3 900 734 05 4.

In der Praxis haben sich bestimmte Gonioradiometertypen bewährt, die ebenfalls in der DIN 5032 Teil 1 und im Dokument CIE No 70 (1987) definiert sind. Von Interesse sind insbesondere Gonioradiometer des Typs 1.1 bis 1.3, bei denen die Lichtquelle während einer Messung bewegt wird, während der Sensor ortsstabil ist, und Gonioradiometer vom Typ 4, bei denen der Sensor bewegt ist, während die Lichtquelle ortsstabil ist. In beiden Fällen ist die Lichtquelle oder Strahlungsquelle mit ihrem Lichtschwerpunkt bzw. Strahlungsschwerpunkt im Zentrum des Gonioradiometers angebracht. Je nach Typ des Gonioradiometers werden A-, B- oder C-Ebenen gemessen. Lichttechnische Prüfungsstellen oder Labore müssen unterschiedliche Gonioradiometer bereithalten, um alle Messaufgaben bedienen zu können.

Wolfgang Patelay: "Robots automate goniophotometer characterization of LED Systems", LEDs Magazine: Online article, 8. Oktober 2013 (2013-10-08), Seiten 1-7, XP055201579, beschreibt die Verwendung eines 6-Achsen-Roboters zur Implementierung eines Gonioradiometers, bei dem während eines Messvorgangs eine gleichzeitige Bewegung des Roboters in seinen sechs Achsen erfolgt.

Aus der DE 10 2004 037 355 A1 ist ein Gonioradiometer bekannt, bei dem an einem umlaufenden Dreharm mit zwei zueinander angestellten Schenkeln zwei Schwenkarme angelenkt sind, jeweils einen Meßkopf tragen. Es ist vorgesehen, dass die Meßköpfe bei Drehen des Dreharms um 360° und Verschenken der Schwenkarme um 180° entlang der Hüllfläche einer Hemisphäre bewegbar sind.

Der vorliegenden Erfindung die Aufgabe zugrunde, ein Gonioradiometer zur richtungsabhängigen Messung mindestens einer lichttechnischen oder radiometrischen Kenngröße einer optischen Strahlungsquelle bereitzustellen, das in einfacher Weise unterschiedliche Goniometer-Typen realisieren und dementsprechend Messwerte wahlweise z.B. in A-Ebenen, B-Ebenen oder C-Ebenen erfassen kann. Des Weiteren soll ein entsprechendes Verfahren zur richtungsabhängigen Messung solcher Kenngrößen einer optischen Strahlungsquelle bereitgestellt werden.

Diese Aufgabe wird erfindungsgemäß durch ein Verfahren mit den Merkmalen des Anspruchs 1 und ein Gonioradiometer mit den Merkmalen des Anspruchs 5 gelöst.

Ausgestaltungen der Erfindung sind in den Unteransprüchen angegeben.

Danach betrifft die vorliegende Erfindung in einem ersten Erfindungsaspekt ein Verfahren, bei dem der Sensor oder die Strahlungsquelle an einem Halter eines Sechs-Achsen-Schwenkarm-Roboters befestigt ist. Es ist erfindungsgemäß vorgesehen, dass der Roboter während eines Messvorgangs, bei dem Messwerte erfasst werden, die entweder unterschiedliche Abstrahlwinkel innerhalb einer betrachteten Ebene eines Ebenensystems oder unterschiedliche Ebenen bei einem betrachteten Abstrahlwinkel betreffen, um nur genau eine seiner Achsen verschwenkt wird.

Die erfindungsgemäße Lösung beruht auf der Erkenntnis, dass eine Bewegung der Strahlungsquelle oder des Sensors vorteilhafterweise durch einen Sechs-Achsen-Schwenkarm-Roboter durchgeführt wird, wobei jedoch während eines Messvorgangs zur Erfassung von Messwerten zu unterschiedlichen Abstrahlwinkeln innerhalb einer betrachteten Ebene oder zu unterschiedlichen Ebenen bei einem betrachteten Abstrahlwinkel eine Schwenkbewegung nur um genau eine der Achsen des Roboters durchgeführt wird. Durch das Verschwenken des Roboters nur um eine seiner Achsen wird erreicht, dass unerwünschte Toleranzen bei der Bestimmung der Abstrahlungsrichtung minimiert werden. Denn würde der verwendete Roboter eine Bewegung um mehrere Achsen durchführen, was grundsätzlich mit einem Mehr-Achsen-Schwenkarm-Roboter natürlich möglich ist, würden sich die Toleranzen für die einzelnen Achsen aufaddieren.

Die erfindungsgemäße Lösung realisiert somit einen Messvorgang unter Verschwenkung eines Roboters um nur genau eine seiner Achsen und ermöglicht dadurch eine effektive und mit minimalen Toleranzen behaftete Messung. Sie reduziert gewissermaßen den durch eine große Anzahl von Freiheitsgraden ausgezeichneten Parameterraum eines Mehr-Achsen-Schwenkarm-Roboters dahingehend, dass während eines Messvorgangs betreffend Messwerte zu unterschiedlichen Abstrahlwinkeln innerhalb einer betrachteten Ebene oder zu unterschiedlichen Ebenen bei einem betrachteten Abstrahlwinkel ein Verschwenken um nur genau eine der Achsen erfolgt.

Gleichzeitig ist es durch Verwendung eines Sechs-Achsen-Schwenkarm-Roboters möglich, die Achse, um die ein Verschwenken während eines Messvorgangs stattfindet, in unterschiedlicher Weise derart räumlich auszurichten, dass eine Messung in einem der normierten Ebenensysteme (A-Ebene, B-Ebene und C-Ebene) erfolgt. Damit ist es nicht mehr erforderlich, für die Messungen in unterschiedlichen Ebenensystemen unterschiedliche Gonioradiometertypen vorzuhalten.

Die erfindungsgemäße Lösung ermöglicht es somit, einen vorgegebenen Raumwinkel durch Aufnahme eng beieinander liegender Ebenen eines Ebenensystems mit geringen Toleranzen zu berechnen. Gleichzeitig ist die Programmierung relativ einfach, da während eines Messvorgangs ein Verschwenken des Roboters nur um genau eine seiner Achsen erfolgt. Dabei kann vorgesehen sein, dass die bewegte Achse mit einem Befehl vom Anfangswinkel des aufzunehmenden Raumwinkels bis zum Endwinkel mit einer Geschwindigkeit gefahren wird, wobei Beschleunigungs- und Abbremsrampen außerhalb des zu untersuchenden Raumwinkels gelegt werden. Die Vorteile der erfindungsgemäßen Lösung liegen somit in einer einfachen Programmierung, niedrigen Toleranzen (da nur eine der Achsen des Roboters bei einem Messvorgang bewegt wird) sowie kurzen Messzeiten aufgrund geringer Beschleunigungs- und Abbremszeiten der bewegten Achse.

Die Erfindung nimmt dabei Messungen unter Verwendung eines Ebenensystems vor, bei dem die Ebenen eines Ebenensystems sich in einer Schnittgraden schneiden, die durch den Strahlungsschwerpunkt der Strahlungsquelle geht. Eine bestimmte Ebene eines Ebenensystems wird durch einen ersten Winkel identifiziert. Innerhalb einer solchen Ebene ist ein zweiter Winkel, der Abstrahlwinkel, definiert, der die Abstrahlrichtung der Strahlung innerhalb einer betrachteten Ebene angibt. Ein bestimmter Punkt im Raum wird somit zum einen mittels eines ersten Winkels, der die Ebene identifiziert, und mittels eines zweiten Winkels, der die Abstrahlrichtung innerhalb der betrachteten Ebene angibt, definiert. Die drei normierten A-, B- und C-Ebenensysteme unterscheiden sich durch ihre Anordnung zur Lichtquelle und in ihrer Definition von zwei Bezugsachsen, wie in der DIN 5032 Teil 1 im Einzelnen beschrieben, wobei auf diese Beschreibung ergänzend Bezug genommen wird.

Die erfindungsgemäße Lösung umfasst dabei zwei Alternativen. Gemäß der ersten Alternative betrifft ein Messvorgang, während dessen der Roboter um nur genau eine seiner Achsen verschwenkt wird, die Erfassung von Messwerten, die unterschiedliche Abstrahlwinkel innerhalb einer betrachteten Ebene eines ausgewählten Ebenensystems betreffen. Bei dieser Alternative wird bei Verschwenken des Roboters um genau eine Achse somit der Abstrahlwinkel innerhalb einer betrachteten Ebene variiert und werden für die unterschiedlichen Abstrahlwinkel Messwerte erfasst.

Gemäß der zweiten Alternative des Anspruchs 1 werden während des Verschwenkens des Roboters um genau eine Achse Messwerte erfasst, die unterschiedliche Ebenen bei einem betrachteten Abstrahlwinkel betreffen. Bei einem Verschwenken des Roboters um genau eine seiner Achsen werden somit Messwerte erfasst, die bei konstantem betrachteten Abstrahlwinkel unterschiedliche Ebenen betreffen. Für den Fall, dass das Ebenensystem A-Ebenen enthält, werden bei dieser zweiten Variante "Breitenkreise" gemessen.

Gemäß einer Ausgestaltung der Erfindung ist vorgesehen, dass der Sensor oder die Strahlungsquelle vor dem Verschwenken um die eine Schwenkachse derart durch den Roboter positioniert wird, dass der Strahlungsschwerpunkt der Strahlungsquelle auf der Schwenkachse liegt. Hierdurch wird sichergestellt, dass bei Verschwenken des Roboters um die Schwenkachse die räumliche Lage des Strahlungsschwerpunkts der Strahlungsquelle nicht geändert wird und vielmehr die Strahlungsquelle im Zentrum des Gonioradiometers verbleibt.

Eine weitere Ausgestaltung der Erfindung sieht vor, dass der Roboter während des Verschwenkens zumindest über einzelne Winkelbereiche (d.h. abschnittsweise oder über den gesamten Schwenkbereich) eine kontinuierliche Bewegung durchführt und der Sensor während dieser kontinuierlichen Bewegung kontinuierlich Messwerte aufnimmt. Eine solche kontinuierliche Bewegung während des Verschwenkens kann auch als Scan-Bewegung oder Scan-Vorgang bezeichnet werden. Die kontinuierliche Aufnahme von Messwerten während eines Scan-Vorgangs stellt eine hocheffektive Betriebsart zur Aufnahme von Messwerten dar, da es nicht erforderlich ist, einzelne Raumpunkte gesondert durch den Roboter anzufahren, für welchen Fall der Roboter bzw. der oder die involvierten Schwenkarme nachteilig zwischen den einzelnen Punkten jeweils beschleunigt und abgebremst werden müssten. Vielmehr wird eine kontinuierliche Bewegung durchgeführt, während derer kontinuierlich Messwerte aufgenommen werden. Beispielsweise kann vorgesehen sein, dass für jeden hundertsten Grad einer Schwenkbewegung ein Messwert aufgenommen wird. Die während eines Scan-Vorgangs aufgenommenen Messwerte ermöglichen somit eine feinaufgelöste Erfassung der Winkelverteilung bei der Erfassung einer lichttechnischen oder radiometrischen Kenngröße.

Die Erfindung sieht weiter vor, dass zur Messung der lichttechnischen oder radiometrischen Kenngröße in einer anderen Ebene des betrachteten Ebenensystems oder bei einem anderen Abstrahlwinkel der Roboter in mindestens einer weiteren Schwenkachse verstellt wird, bevor der Roboter erneut um die genau eine Schwenkachse verschwenkt wird. Die Messung besteht also aus einer sukzessiven Folge von Messvorgängen, wobei jeder Messvorgang mit der Verschwenkung des Roboters um genau eine Schwenkachse einhergeht, und wobei zwischen einzelnen Messvorgängen eine andere Ebene des Ebenensystems oder ein anderer Abstrahlwinkel eingestellt werden, indem der Roboter in mindestens einer seiner weiteren Schwenkachsen verstellt wird.

Es wird darauf hingewiesen, dass das erfindungsgemäße Gonioradiometer mit verschiedenen Sensoren realisiert sein kann. Beispiele für einsetzbare Sensoren sind Spektralradiometer, Fotometer, Foto-Multiplier, Infrarot-, Ultraviolett- und Farbmessköpfe.

Weiter wird darauf hingewiesen, dass ein Sensor im Sinne der vorliegenden Erfindung jeder Sensor ist, der optische Strahlung, d. h. ultraviolette Strahlung, Strahlung des sichtbaren Lichtes oder Infrarotstrahlung innerhalb des Wellenlängenfensters von etwa 100 nm (UV-C) bis 1 mm (IR-C) messen kann. Ein Sensor im Sinne der vorliegenden Erfindung kann also eine Wellenlänge oder einen Wellenlängenbereich innerhalb des genannten Wellenlängenfensters erfassen.

Als lichttechnische oder radiometrische Kenngröße wird beispielsweise die Lichtstärkeverteilung oder die Farbverteilung auf einer Kugeloberfläche um die Strahlungsquelle gemessen. Auch kann vorgesehen sein, dass spektroradiometrische Informationen erfasst werden, d. h. eine spektralaufgelöste Erfassung einer lichttechnischen oder radiometrischen Kenngröße erfolgt. Allgemein gilt dabei, dass ein lichttechnischer Wert die fotometrische Entsprechung eines entsprechenden radiometrischen Wertes ist. So erfolgt die fotometrische Bewertung von Lichtquellen mittels lichttechnischer Größen wie Lichtstärke, Lichtstrom, Beleuchtungsstärke und Leuchtdichte. Dabei wird mittels Hellempfindlichkeitskurven die Empfindlichkeit des menschlichen Auges berücksichtigt. Aus radiometrischen Einheiten können fotometrische bzw. lichttechnische Einheiten berechnet werden.

Die vorliegende Erfindung betrifft in einem zweiten Erfindungsaspekt ein Gonioradiometer. Dieses ist durch einen Sechs-Achsen-Schwenkarm-Roboter gekennzeichnet, an dem der Sensor oder die Strahlungsquelle befestigt ist. Dabei sind die Schwenkarme des Roboters bzw. dessen Schwenkachsen derart positioniert, dass der Roboter während eines Messvorgangs, bei dem Messwerte erfasst werden, die unterschiedliche Abstrahlwinkel innerhalb einer betrachteten Ebene eines Ebenensystems oder unterschiedliche Ebenen bei einem betrachteten Abstrahlwinkel betreffen, um nur genau eine seiner Achsen verschwenkt wird.

Eine vorteilhafte Ausgestaltung sieht vor, dass der Sensor oder die Strahlungsquelle in einer Überkopfstellung an einem Halter des Roboters befestigt ist. In einer solchen Überkopfstellung liegt eine maximale Bewegungsfreiheit für größtmögliche Leuchten und Drehungen im Bereich von -180° bis +180° vor.

Gemäß einer Ausgestaltung der Erfindung wird ein Sechs-Achsen-Schwenkarm-Roboter derart betrieben, dass er einen Gonioradiometer vom Typ 1 realisiert. Dabei ist die Lichtquelle am Roboter befestigt und wird diese bei einem Messvorgang bewegt, während der Sensor ortsfest angeordnet ist, bevorzugt im Fernfeld der Lichtquelle, in der die Lichtquelle nur noch als Punkt erscheint.

So kann vorgesehen sein, dass ein Sechs-Achsen-Schwenkarm-Roboter ein Gonioradiometer vom Typ 1.1 realisiert. Dabei sind die Achsen des Roboters derart ausgerichtet, dass während eines Messvorgangs, bei dem Messwerte erfasst werden, die unterschiedliche Abstrahlwinkel innerhalb einer betrachteten Ebene des Ebenensystems betreffen, der Roboter nur in seiner sechsten Achse verschwenkt wird, und dass zur Auswahl einer anderen Ebene des Ebenensystems ein Verschwenken in der ersten Achse erfolgt.

Gemäß einer weiteren Ausgestaltung realisiert ein Sechs-Achsen-Schwenkarm-Roboter ebenfalls ein Gonioradiometer vom Typ 1.1. Bei dieser Ausgestaltung sind die Achsen des Roboters derart ausgerichtet, dass während eines Messvorgangs, bei dem Messwerte erfasst werden, die unterschiedliche Ebenen des Ebenensystems bei einem betrachteten Abstrahlwinkel betreffen, der Roboter nur in seiner sechsten Achse verschwenkt wird, wobei zur Auswahl eines anderen Abstrahlwinkels ein Verschwenken mindestens in der vierten Achse erfolgt. Bei dieser Ausgestaltung erfolgt während eines Messvorgangs eine Messung eines "Breitenkreises", wobei die Ebenen (A-Ebenen) während des Messvorgangs variiert werden, während der Abstrahlwinkel konstant ist. Bei darauffolgenden Messungen wird ein anderer Abstrahlwinkel eingestellt.

Gemäß einer weiteren Ausgestaltung der Erfindung realisiert ein Sechs-Achsen-Schwenkarm-Roboter ein Gonioradiometer vom Typ 1.2. Dabei sind die Achsen des Roboters derart ausgerichtet, dass während eines Messvorgangs, bei dem Messwerte erfasst werden, die unterschiedliche Abstrahlwinkel innerhalb einer betrachteten Ebene des Ebenensystems betreffen, der Roboter nur in seiner ersten Achse verschwenkt wird, und das zur Auswahl einer anderen Achse des Ebenensystems ein Verschwenken in mindestens der fünften Achse erfolgt.

Dabei kann vorgesehen sein, dass der Roboter derart ausgerichtet ist, dass bei Winkeln Bₓ der Ebenen des Ebenensystems B, bei denen X > 0° ist und bei denen es zu Kollisionen der Strahlungsquelle oder der Strahlungsquellenhalterung mit Gelenkarmen des Roboters kommen kann, die entsprechenden B-Ebenen durch Rotation um die sechste Achse um 180° gedreht werden und in den um 180° gedrehten Ebenen gemessen wird, wobei ebenfalls eine Drehung um die fünfte Achse um 180° erfolgt, um in den kollisionsfreien Bereich zu kommen.

Gemäß einer weiteren Ausgestaltung realisiert der Sechs-Achsen-Schwenkarm-Roboter ein Gonioradiometer vom Typ 1.3. Dabei sind die Achsen des Roboters derart ausgerichtet, dass während eines Messvorgangs, bei dem Messwerte erfasst werden, die unterschiedliche Abstrahlwinkel innerhalb einer betrachteten Ebene des Ebenensystems (C-Ebenen) betreffen, der Roboter nur in seiner ersten Achse verschwenkt wird, und dass zur Auswahl einer anderen Ebene des Ebenensystems (C-Ebenen) ein Verschwenken in der sechsten Achse erfolgt.

Eine weitere Ausgestaltung sieht vor, dass der Sechs-Achsen-Schwenkarm-Roboter ein Gonioradiometer vom Typ 4 realisiert. Dabei ist der mindestens eine Sensor am Roboter befestigt und wird dieser bei einem Messvorgang bewegt. Die Lichtquelle dagegen steht fest. Der Sensor wird auf einer virtuellen Kugelfläche geführt, in deren Mittelpunkt sich der Lichtschwerpunkt der Lichtquelle befindet. Dabei wird das Ebenensystem durch Ebenen gebildet, die durch den Mittelpunkt einer Kugel laufen, der durch den Strahlungsschwerpunkt der Strahlungsquelle gebildet ist. Bei einem Messvorgang werden somit Daten aufgenommen, die einem Großkreis auf der Kugeloberfläche einer Kugel entsprechen, in deren Zentrum sich der Strahlungsschwerpunkt der Strahlungsquelle befindet.

Es kann bei dem Betrieb eines Gonioradiometers gemäß dem Typ 4 vorgesehen sein, dass der Roboter derart ausgerichtet ist, dass während eines Messvorgangs, bei dem Messwerte erfasst werden, die unterschiedliche Abstrahlwinkel innerhalb einer betrachteten Ebene des Ebenensystems betreffen, der Roboter nur in seiner sechsten Achse verschwenkt wird und dass zur Auswahl einer anderen Ebene des Ebenensystems ein Verschwenken in der ersten Achse erfolgt.

Weiter kann beim Betrieb als Gonioradiometer vom Typ 4 vorgesehen sein, dass der Sensor über einen Ausleger mit dem Roboter verbunden ist, und zwar derart, dass der Sensor bei Verschwenken des Roboters um die sechste Achse einen Großkreis um den Strahlungsschwerpunkt der Strahlungsquelle abfährt. Dabei können auch zwei Sensoren eingesetzt werden, die an den Armen zweier entsprechende Ausleger in einem Winkelabstand von 180 ° zueinander angeordnet sind.

Die Erfindung wird nachfolgend unter Bezugnahme auf die Figuren der Zeichnung anhand mehrerer Ausführungsbeispiele näher erläutert. Es zeigen:
- Fig. 1: ein erfindungsgemäßes Gonioradiometer in einer Betriebsweise, in der ein Gonioradiometer vom Typ 1.3 realisiert ist;
- Fig. 2: ein erfindungsgemäßes Gonioradiometer in einer Betriebsweise, bei der ein Gonioradiometer vom Typ 1.2 realisiert ist, in einer ersten Ausgestaltung;
- Fig. 3: ein erfindungsgemäßes Gonioradiometer in einer Betriebsweise, bei der ein Gonioradiometer vom Typ 1.2 realisiert ist, in einer zweiten Ausgestaltung;
- Fig. 4: ein erfindungsgemäßes Gonioradiometer in einer Betriebsweise, bei der ein Gonioradiometer vom Typ 1.1 realisiert ist, in einer ersten Betriebsweise;
- Fig. 5: ein erfindungsgemäßes Gonioradiometer in einer Betriebsweise, bei der ein Gonioradiometer vom Typ 1.1 realisiert ist, in einer zweiten Betriebsweise;
- Fig. 6: ein erfindungsgemäßes Gonioradiometer in einer Betriebsweise, bei der ein Gonioradiometer vom Typ 1.1 realisiert ist, in einer Variante der zweiten Betriebsweise;
- Fig. 7: ein erfindungsgemäßes Gonioradiometer in einer Betriebsweise, bei der ein Gonioradiometer vom Typ 4 realisiert ist;
- Fig. 8: die Darstellung eines Kugelkoordinatensystems mit Definitionen der Winkel Phi und Theta;
- Fig. 9: schematisch ein Goniometer vom Typ 1.1 mit räumlich fester horizontaler und räumlich bewegbarer vertikaler Achse für die Messung von A-Ebenen und B-Ebenen;
- Fig. 10: schematisch ein Goniometer vom Typ 1.2 mit einer räumlich festen vertikalen und einer räumlich bewegten horizontalen Achse zur Messung von A-Ebenen und B-Ebenen;
- Fig. 11: schematisch ein Goniometer vom Typ 1.3 mit einer räumlich festen vertikalen und einer räumlich bewegbaren horizontalen Achse, wobei die Leuchte senkrecht zur bewegten Achse steht, für eine Messung von C-Ebenen;
- Fig. 12: schematisch einen im Stand der Technik bekannten Sechs-Achsen-Gelenkarm-Roboter zur Realisierung von Translationen in Rotationen im Raum, gemäß ISO 9787, Annex A.

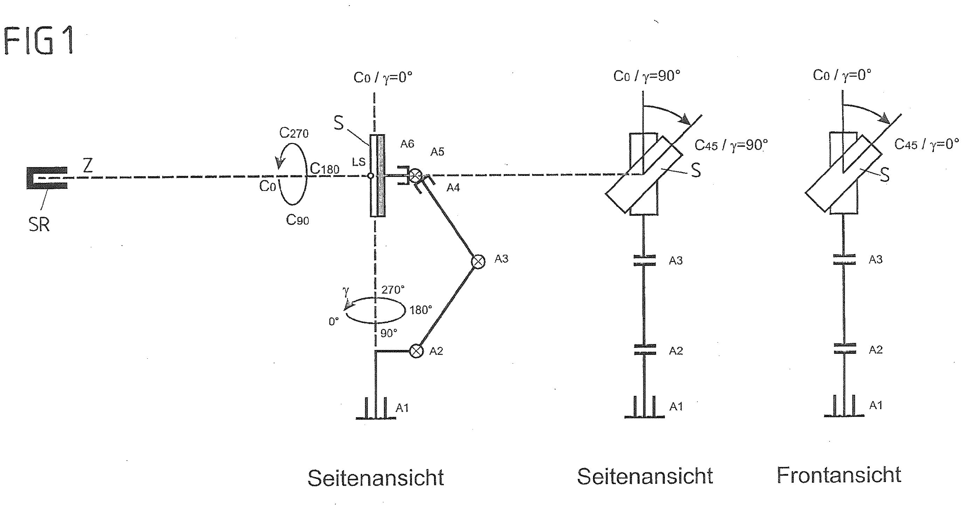

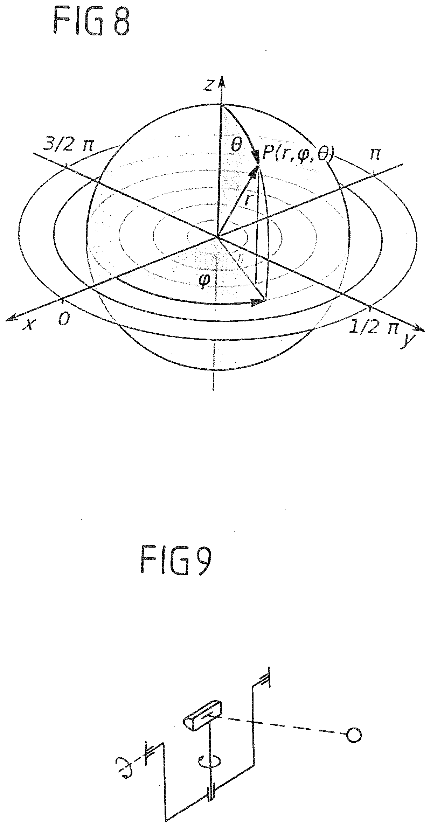

Bevor die Erfindung anhand der Figuren 1 bis 7 an Ausführungsbeispielen näher erläutert wird, wird zunächst zum besseren Verständnis der Erfindung anhand der Figuren 8 bis 12 der Hintergrund der Erfindung erläutert.

Die Figur 8 stellt ein Kugel-Koordinatensystem unter Darstellung der Definition der Winkel Phi ϕ und Theta θ dar. Befindet sich eine Strahlungsquelle im Ursprung eines solchen Kugel-Koordinatensystems, so könnten lichttechnische oder radiometrische Kenngrößen der Strahlungsquelle goniometrisch, d. h. für alle Richtungen durch Bewegen der Strahlungsquelle oder durch Bewegen eines Sensors nacheinander in den Winkelbereichen - 180 ° ≤ ϕ ≤ 180 ° und 0 ≤ θ ≤ 180 ° gemessen werden. Durch zwei Winkel ϕ, θ kann somit eine Ausstrahlungsrichtung definiert werden.

Es ist üblich, die Lichtstärkeverteilung oder eine andere richtungsabhängige lichttechnische oder radiometrische Kenngröße unter Verwendung bestimmter Ebenensystemen zu beschreiben, die als A-Ebenen, B-Ebenen und C-Ebenen bezeichnet werden und in der bereits erwähnten DIN 5032 Teil 1 erläutert sind. Jedes Ebenensystem definiert zwei Achsen, die sich im Lichtschwerpunkt der Lichtquelle schneiden. Eine erste Achse ist durch eine Schnittgerade gegeben, in der sich alle Ebenen des Ebenensystems schneiden. Die zweite Achse ist durch die Orientierung der Lampe in der Strahlungsquelle gegeben.

Bei A-Ebenen werden die einzelnen Ebenen mit Winkeln Ax mit - 180° ≤ X ≤ 180° gekennzeichnet. Innerhalb einer A-Ebene werden Richtungen bzw. Abstrahlwinkel α durch Winkel α von - 90 ° ≤ α ≤ 90° angegeben.

Bei B-Ebenen werden die einzelnen Ebenen mit Winkeln B_{X} von -180° ≤ X ≤ 180° gekennzeichnet. Innerhalb einer B-Ebene werden Richtungen durch Winkel β von - 90° ≤ β ≤ 90° angegeben.

Bei C-Ebenen werden die einzelnen Ebenen mit Winkeln Cₓ von 0° ≤ X ≤ 360° gekennzeichnet. Innerhalb einer C-Ebene werden Richtungen durch Winkel γ von 0 ≤ γ ≤ 180° angegeben.

Zurückkommend auf die Figur 8 sei angemerkt, dass, sofern die Polarachse parallel zur z-Achse verläuft, die Winkel ϕ und θ ein C-Ebenensystem Cₓ, γ beschreiben, wobei ϕ = Cₓ und θ = γ ist.

Die Figuren 9 bis 11 zeigen schematisch Gonioradiometer des Typs 1.1 bis 1.3. Es sind jeweils schematisch eine Strahlungsquelle mit einem lichtemittierenden Bereich, ein Sensor (kreisförmig) und zwei Achsen dargestellt, um die die Strahlungsquelle verschwenkt werden kann. Eine der Achsen ist räumlich feststehend, d.h. bei einem Verschwenken der Strahlungsquelle um diese Achse ändert sich deren räumliche Ausrichtung nicht. Die andere Achse ist räumlich nicht feststehend, da sich bei einem Verschwenken um die feststehende Achse die räumliche Ausrichtung der anderen Achse notwendigerweise ändert.

Bei einem Goniometer des Typs 1.1 gemäß der Figur 9 liegt eine in ihrer räumlichen Position feststehende horizontale Achse und eine in ihrer räumlichen Position bewegliche Achse vor, die in der Darstellung der Fig. 9 vertikal verläuft, jedoch ihre räumliche Position bei Verschwenken der Anordnung um die horizontale Achse ändert. Es erfolgt eine Messung von A-Ebenen oder B-Ebenen.

Ein zur Messung von A-Ebenen zum Einsatz kommendes Gonioradiometer vom Typ 1.1 realisiert somit eine in ihrer räumlichen Position feststehende, horizontale Achse. Für den Fall, dass die Anordnung mit der Strahlungsquelle um die feststehende, horizontale Achse bewegt bzw. gescannt wird, werden A-Ebenen aufgenommen, wobei der Abstrahlwinkel α variiert wird. Für den Fall dagegen, dass sich bei einem Messvorgang die bewegte, vertikale Achse bei festem α bewegt, wird der Parameter Aₓ variiert, so dass der feststehende Sensor auf einer Kugeloberfläche auf "Breitenkreisen" läuft. Letztere Betriebsart wird typischerweise für die Charakterisierung von Automobil-Scheinwerfern benutzt.

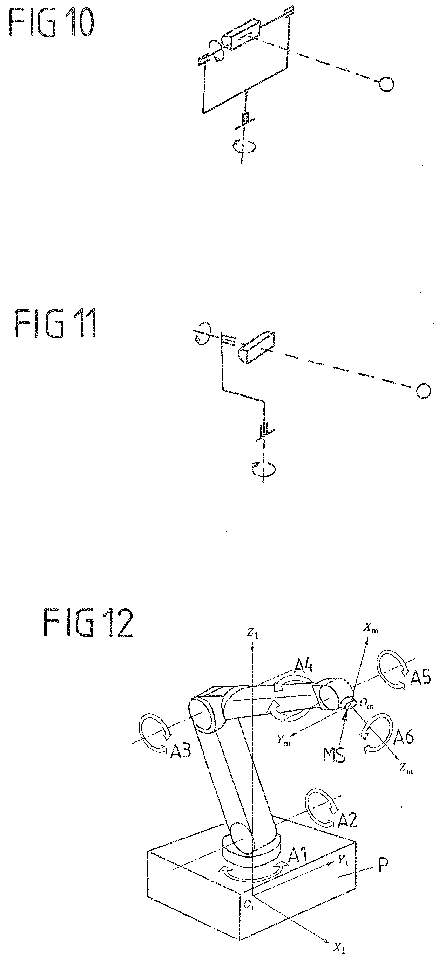

Bei einem Gonioradiometer vom Typ 1.2 gemäß der Figur 10 liegen eine feststehende vertikale Achse und eine bewegliche horizontale Achse vor. Es erfolgt ebenfalls eine Messung in A-Ebenen oder B-Ebenen. Bei einem Gonioradiometer vom Typ 1.3 gemäß der Figur 11 liegen eine feststehende vertikale Achse und eine bewegliche horizontale Achse vor. Die Messung erfolgt in C-Ebenen.

Weiter sind Gonioradiometer vom Typ 4 (nicht gesondert dargestellt) bekannt und mittels eines erfindungsgemäßen Gonioradiometers realisierbar, wie noch ausgeführt werden wird. Bei einem Gonioradiometer vom Typ 4 liegen eine feststehende Lichtquelle und eine Anordnung vor, mittels derer ein Sensor oder Messkopf des Gonioradiometers auf einer virtuellen Kugeloberfläche geführt werden kann, in deren Mittelpunkt sich der Lichtschwerpunkt der Lichtquelle befindet. Gonioradiometer vom Typ 4 dienen somit zur Ermittlung der Bestrahlungs- oder Beleuchtungsstärkeverteilung auf einer Kugeloberfläche, um daraus integrale Größen wie Strahlungsleistung oder Lichtstrom abzuleiten. Die Lichtquelle ist in der Mitte dieser Kugel in einer bestimmungsgemäßen Orientierung (stehend, hängend, liegend) gehaltert.

Die Figur 12 zeigt einen Sechs-Achsengelenkarm-Roboter zur Ausführung von Translationen und Rotationen im Raum. Ein solcher Roboter ist in dem internationalen Standard ISO 9787, Annex A beschrieben, dem auch die Figur 12 entnommen ist, und auf den ergänzend Bezug genommen wird. Der Roboter weist insgesamt sechs Drehachsen auf, die als Achsen A1, A2, A3, A4, A5 und A6 bezeichnet werden. Der Roboter ist auf einer Basis P angeordnet, die eine horizontale Ebene definiert, die senkrecht zur Schwenkachse A1 des Roboters ausgerichtet ist. Im Folgenden werden Betriebsweisen eines solchen Mehr-Achsen-Schwenkarm-Roboters zur Realisierung eines Gonioradiometers gemäß den Typen 1.1, 1.2, 1.3 und 4 beschrieben, wobei eine Licht- oder Strahlungsquelle mit einer mechanischen Schnittstelle MS beispielsweise in Form eines Montageflansches verbunden ist, die sich auf der Achse A6 befindet, also der am entferntesten zur Achse A1 angeordneten Achse.

Alternativ kann die Leucht- oder Strahlungsquelle mit einem Ausleger verbunden sein, welcher auf der Achse A6 montiert ist.

Diese Erläuterungen vorangestellt sei nunmehr anhand der Figur 1 ein erstes Ausführungsbeispiel der vorliegenden Erfindung unter Verwendung eines Sechs-Achsen-Schwenkarm-Roboters gemäß der Figur 12 beschrieben.

Die Figur 1 zeigt schematisch einen Sechs-Achsen-Schwenkarm-Roboter, dessen Achsen derart ausgerichtet sind, dass sie ein Gonioradiometer vom Typ 1.3 realisieren. Der Roboter umfasst sechs Achsen A1, A2, A3, A4, A5, A6. Die Achse A1 ist schwenkbar auf einem Fuß bzw. einem Sockel befestigt. Eine Strahlungsquelle S ist über nicht näher dargestellte Befestigungsmittel auf der Achse A6 gelagert. Die Strahlungsquelle besitzt einen Lichtschwerpunkt LS. Bei der Strahlungsquelle S handelt es sich beispielsweise um eine Lichtquelle, z. B. eine Lampe, die Licht im sichtbaren Spektrum emittiert. Ebenso kann es sich um eine Strahlungsquelle handeln, die Licht im infraroten Spektralbereich oder im ultravioletten Spektralbereich emittiert.

Des Weiteren ist ein Sensor SR vorgesehen, der dazu ausgebildet ist, Strahlung, die von der Strahlungsquelle S abgestrahlt und dabei entlang der z-Achse eines im Lichtschwerpunkt LS seinen Ursprung besitzenden Koordinatensystems ausgestrahlt wird, zu detektieren. Der Sensor SR ist ortsfest im Raum angeordnet.

Durch die sechs Achsen A1 bis A6 des Roboters kann die Position der Strahlungsquelle S im Raum variiert werden. Zur Realisierung eines Gonioradiometers vom Typ 1.3 sind die Achsen A2, A3 und A4 derart positioniert, dass der Lichtschwerpunkt LS der Strahlungsquelle S in der Verlängerung der Achse A1 liegt. Weiter ist vorgesehen, dass die Achse A5 die Abstrahlungsachse der Strahlungsquelle S derart ausrichtet, dass die z-Achse des Koordinatensystems auf den Sensor SR zeigt. Die Achsen A2, A3, A4, A5 werden einmalig eingestellt und im Laufe der Messungen nicht verstellt.

Bei dem Gonioradiometer des Typs 1.3 der Figur 1 werden C-Ebenen durch die Achse A6 eingestellt. Innerhalb einer eingestellten C-Ebene werden Richtungen γ durch die Achse A1 angegeben. Der Betrieb ist derart, dass der Roboter während eines Messvorgangs, bei dem Messwerte erfasst werden, die unterschiedliche Abstrahlwinkel innerhalb einer betrachteten C-Ebene betreffen, nur um die Achse A1 verschwenkt wird. Während dieser kontinuierlichen Bewegung werden durch den Sensor SR kontinuierlich Messwerte aufgenommen. Ein solcher Schwenk um die Achse A1 wird als Messvorgang bezeichnet. Eine andere C-Ebene wird durch Verschwenken der Strahlungsquelle S um die Achse A6 eingestellt. Anschließend erfolgt wiederum ein Messvorgang. Das gesamte C-Ebenen-Büschel kann also durch schrittweises Abfahren des Winkels Cₓ über die Achse 6 und jeweils anschließenden Scan in der C-Ebene mittels der Achse 1 sehr schnell und mit ökonomischen Bewegungen der Achsen vermessen werden.

Wie bereits erläutert, werden die Achsen A2, A3, A4 und A5 lediglich einmal zu Beginn der Messung eingestellt, um die Leuchte S in Position zu bringen und in Bezug zum Sensor SR auszurichten.

Weiter ist in der hier beschriebenen Ausführungsform, jedoch nicht notwendigerweise vorgesehen, dass die zweite Achse A2 in der so genannten "Überkopfstellung" betrieben wird, was dazu führt, dass der Drehpunkt der Achse A6 in Verlängerung der ersten Achse A1 gebracht ist. Dabei kommt der Lichtschwerpunkt LS der Strahlungsquelle S in die Verlängerung der ersten Achse A1, so dass durch alleinige Bewegung der Achse A6 eine C-Ebene eingestellt wird, deren Winkel γ durch die Achse A1 variiert werden kann.

Die Verwendung der Überkopfstellung hat den Vorteil, dass der Abstrahlwinkel γ in keiner Weise eingeschränkt wird und alle Bewegungsformen, die für Goniometer vom Typ 1.3 notwendig sind, einfach dargestellt werden können.

Die mittlere Seitenansicht der Figur 1 zeigt die Anordnung nach Verschwenken um die Achse A1 um γ = 90°. Weiter wird die Strahlungsquelle S in zwei unterschiedlichen C-Ebenen (C₀ und C₄₅) dargestellt. Die Frontansicht der Figur 1 zeigt ebenfalls die Strahlungsquelle S in zwei unterschiedlichen C-Ebenen (d. h. nach entsprechender Rotation um die Achse A6), nämlich die Ebenen C₀ und C₄₅, bei einem Abstrahlwinkel γ von 0.

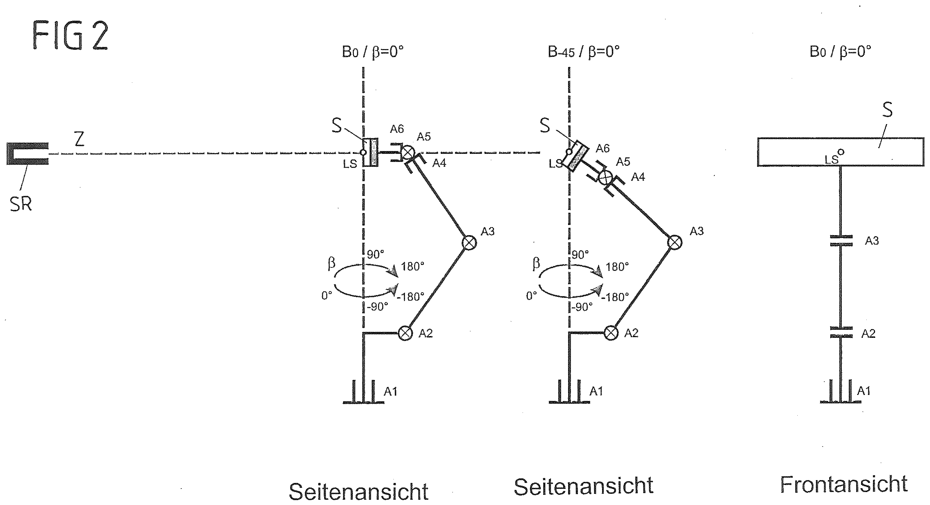

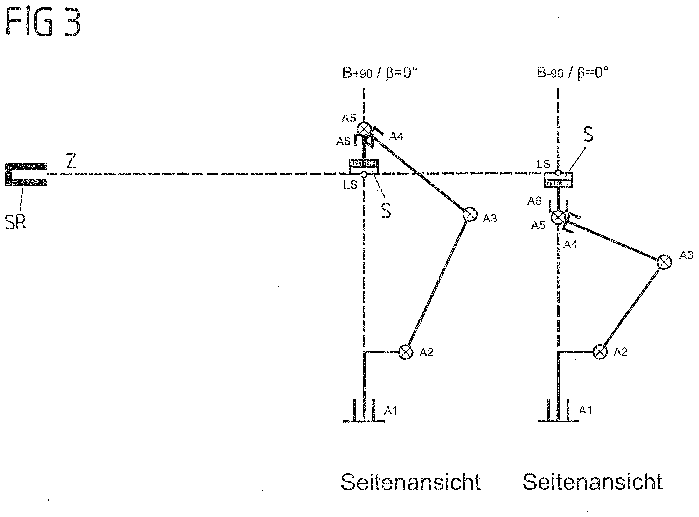

Die Figuren 2 und 3 zeigen einen Sechs-Achsen-Schwenkarm-Roboter, bei dem die Schwenkarme des Roboters bzw. dessen Achsen derart positioniert sind, dass der Roboter ein Gonioradiometer vom Typ 1.2 realisiert.

Gemäß DIN 5032 unterscheiden sich die B- und C-Ebenen lediglich durch eine andere Richtung der Leuchte bzw. der Strahlungsquelle, jedoch arbeiten beide mit vertikaler feststehender Achse und horizontal bewegter Achse. Damit ist die bevorzugte Achs-Konstellation für diese Anwendung identisch mit der in Bezug auf die in Figur 1 beschriebenen Achs-Konstellation, jedoch mit einer anderen Ausrichtung der Strahlungsquelle S. Es ist somit eine Halterung der Strahlungsquelle S derart vorgesehen, dass sie um 90° gegenüber der Ausrichtung in der Figur 1 gedreht ist, wobei der Lichtschwerpunkt LS der Strahlungsquelle S weiterhin in der Verlängerung der Achse A1 positioniert ist.

Während eines Messvorgangs, bei dem Messwerte erfasst werden, die unterschiedliche Abstrahlwinkel β innerhalb einer betrachteten B-Ebene betreffen, wird der Roboter nur um seine Achse A1 verschwenkt. Zur Auswahl einer anderen Ebene des B-Ebene-Systems erfolgt ein Verschwenken in der Achse A5. Durch Variation der Achse A5 wird der Winkel Bₓ eingestellt, während mit der Achse A1 innerhalb einer B-Ebene der Abstrahlwinkel β in einem Schwenk bzw. Scan variiert wird.

Zur Erhaltung des Lichtschwerpunkts LS werden ggf. noch die Achsen A2 und A3 korrigiert, wenn eine neue B-Ebene bzw. ein neuer entsprechender Winkel Bₓ eingestellt werden soll. Während eines Scans bzw. eines Messvorgangs erfolgt eine Drehung aber allein um die Achse A1, während die anderen Achsen starr sind. Zwischen verschiedenen Scans bzw. Messvorgängen kann somit eine Manipulation einer Mehrzahl von Achsen erfolgen, um eine neue Ebene des betrachteten Ebenen-Systems einzustellen. Während eines Messvorgangs zum Ausmessen der Abstrahlwinkel innerhalb einer betrachteten Ebene erfolgt aber ein Verschwenken nur um genau eine Achse.

Auch bei der Figur 2 ist die bevorzugte Anordnung die Überkopfstellung, in der die Achsen A2, A3 und A5 zur Einstellung einer B-Ebene unter Beibehaltung des Lichtschwerpunktes benutzt werden. Die Achse A6 richtet die Leuchten-Achse für β=0 sowohl senkrecht zur Verbindungslinie zwischen Lichtschwerpunkt LS und Sensor SR als auch senkrecht zur Achse A1 aus.

In der linken Seitenansicht der Figur 2 wird eine B-Ebene mit dem Winkel B₀ betrachtet, bei der mittleren Seitenansicht der Figur 2 eine B-Ebene mit dem Winkel B-₄₅. Der Abstrahlwinkel β ist in beiden Fällen Null. Die rechte Frontansicht der Figur 2 zeigt die B-Ebene mit dem Winkel Bₒ und den Abstrahlwinkel β = 0.

Die in der Fig. 2 gezeigte Halterung hat allerdings Grenzen, insbesondere wenn die Strahlungsquellen (z. B. Leuchten) größer sind, es sich beispielsweise um typische Langfeldleuchten handelt. Grenzen sind mit einer solchen Halterung deswegen verbunden, weil der Lichtschwerpunkt LS und damit auch die Masse der Strahlungsquelle für diesen Fall immer weiter vom Montageflansch wegrückt. Der bevorzugte Betrieb ist daher eine Montage der Leuchte mit nahe am Montageflansch fixiertem Licht- und Massenschwerpunkt.

Bei der Anordnung gemäß der Figur 2 verhält es sich so, dass die Einstellung von B-Ebenen mit Bₓ ≥ 0°, insbesondere mit Bₓ ≥ 90° kritisch ist, weil der Halteflansch der Strahlungsquelle S und die Strahlungsquelle S selbst mit dem Schwenkarm zwischen der Achse A3 und der Achse A4 kollidieren kann. Dieses Problem kann durch Drehen der Achse A6 um 180° gelöst werden, wodurch ganz allgemein die B-Ebene B₊ₓ in die B-Ebene B₋₁₈₀₋ₓ transformiert wird, so dass B-Ebenen der Leuchte alternativ zum unteren, kollisionsgefährdeten Bereich auch im oberen, freien Winkelbereich oberhalb des Roboters gemessen werden können. Dies ist in der Figur 3 für x=90° dargestellt. Bei einer Bewegung der Achse A5 um 180° bewegt die sich Leuchte von B=-90° in die Position von B=+90°. Dreht man nun aber die Achse A6 um 180°, so wird B=-90° in B=+90° transformiert. Die Figur 3 zeigt in der linken Seitenansicht die Anordnung, die aus der rechten Seitenansicht der Figur 3 durch Drehen um 180° um die Achse A5 und um 180° um die Achse A5 hervorgeht.

Bei B-Ebenen kann somit vorgesehen sein, dass für Winkel Bₓ, bei denen es zu Kollisionen der Strahlungsquelle (Leuchte) oder der Halterung der Strahlungsquelle mit Gelenkarmen des Roboters kommt, die entsprechenden B-Ebenen durch Rotation der Achse A5 um 180° und eine Messung in den um 180° gedrehten Ebenen erfolgt.

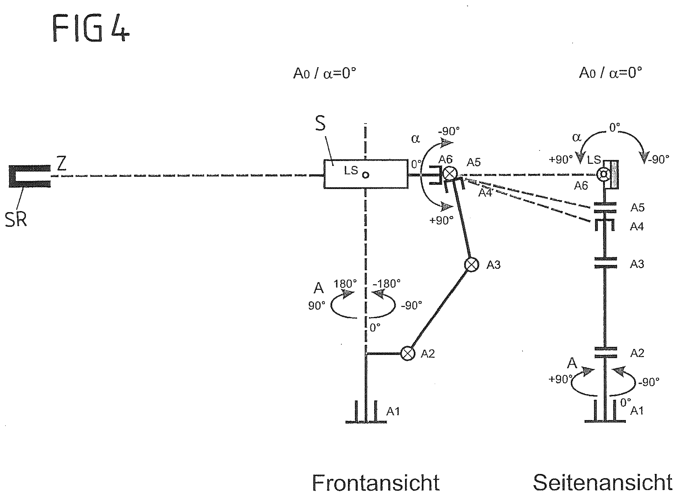

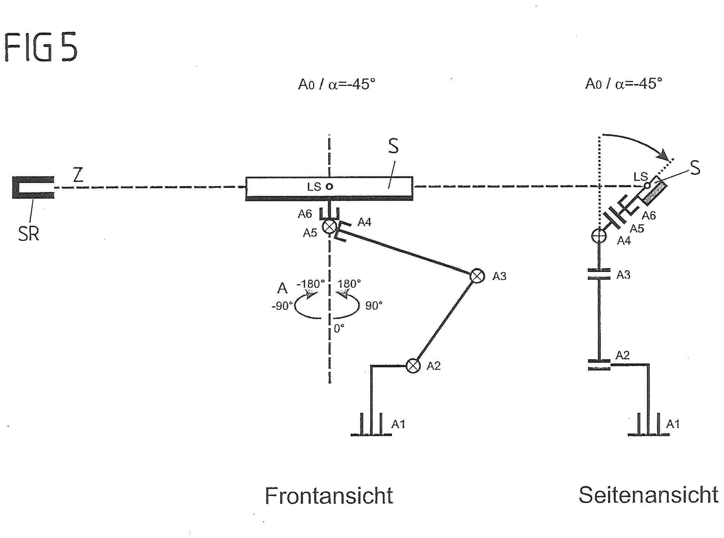

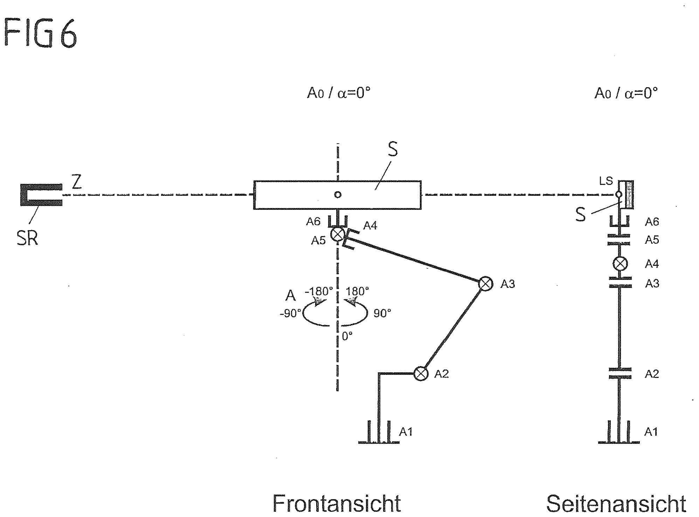

Die Figuren 4, 5 und 6 zeigen Konfigurationen eines Sechs-Achsen-Schwenkarm-Roboters, die ein Gonioradiometer vom Typ 1.1 realisieren. Die Figur 4 zeigt dabei eine Ausführungsvariante, bei der A-Ebenen unter Variation des Abstrahlwinkels α gemessen werden, und die Figuren 5 und 6 eine Ausführungsform, bei der "Breitenkreise" durch Variation der A-Ebenen gemessen werden. Dabei sind in der rechten Seitenansicht zu Zwecken einer übersichtlicheren Darstellung die Achsen A4, A5 und A6 auseinandergezogen dargestellt.

Die Messung von A-Ebenen erfordert eine raumfeste horizontale Achse, wie zur Figur 9 erläutert. Diese horizontale Achse wird bei der Ausgestaltung der Figur 4 durch die Achse A6 realisiert. Dabei wird der Prüfling (d. h. die zu prüfende Strahlungsquelle S) im dargestellten Ausführungsbeispiel mit einem 90°-Winkel am Flansch der Achse A6 gehaltert, so dass der Abstrahlwinkel α durch Rotation der Achse A6 variiert werden kann. Auch bei dieser Ausgestaltung liegt der Lichtschwerpunkt LS in Verlängerung der Achse A1, so dass der Winkel Ax bzw. die entsprechende A-Ebene durch Drehen der Achse A1 eingestellt werden kann.

Ein kontinuierlicher Verschwenkvorgang, bei dem der Sensor SR kontinuierlich Messwerte aufnimmt, wird realisiert, indem eine Drehung um die Achse A6 erfolgt. Die Auswahl einer anderen A-Ebene erfolgt durch ein Verschwenken um die erste Achse A1.

Diese Ausführung hat den Vorteil, dass im Gegensatz zu einem Gonioradiometer vom Typ 1.3 oder vom Typ 1.2 nicht die feste Achse inklusive der Masse der bewegten Achse mit dem Prüfling bewegt werden muss, sondern dass die Variation von α nur mit der Masse des Prüflings (inklusive dessen Halterung) über die Achse A6 bewerkstelligt wird und somit geringere Kräfte von den Stellmotoren des Roboters aufgebracht werden müssen.

Die Figuren 5 und 6 zeigen eine Ausrichtung der Achsen des Roboters derart, dass ein Typ 1.1 realisiert wird, wobei anders als bei der Figur 4 jedoch Breitenkreise gemessen werden. Gemäß der Figur 5 ist der Prüfling an einem Befestigungsmittel befestigt, das auf der Achse A6 angeordnet ist. Allgemein gilt, dass der Roboter auf der Achse A6 ein Befestigungsmittel aufweist, beispielsweise einen Befestigungsflansch. Bei einer Drehung um die Achse A6 wird das Befestigungsmittel mitgedreht, und damit auch der an dem Befestigungsmittel befestigte Prüfling.

Die Achsen A1 und A6 verlaufen bei dieser Ausgestaltung parallel. Die Achse A4 verläuft weitgehend horizontal, um möglichst große Objekte (lateral) auf der Achse A6 montieren zu können. Der Abstrahlwinkel α, dem ein Abkippen des auf der Achse A6 montierten Befestigungsflansches entspricht, kann somit weitgehend mit der Achse A4 eingestellt werden. Allerdings müssen dabei anschließend die Achsen A1, A2, A3 und/oder A5 zur Korrektur des Lichtschwerpunktes benutzt werden, um den Lichtschwerpunkt LS wieder in die ursprüngliche Lage zu bringen.

Ein Messvorgang bzw. Scan-Vorgang erfolgt um die Achse A6 des Gelenkarm-Roboters. Dabei werden Messwerte erfasst, die unterschiedliche A-Ebenen bei einem betrachteten Abstrahlwinkel α betreffen. Es erfolgt dementsprechend eine Messung eines "Breitenkreises" unter Variation des Winkels Aₓ.

Zur Auswahl eines anderen Abstrahlwinkels α erfolgt ein Verschwenken mindestens in der vierten Achse A4, wobei wie erläutert gegebenenfalls die weiteren Achsen dabei mitwirken, dass der Lichtschwerpunkt LS räumlich konstant bleibt. Nach Einstellen eines anderen Abstrahlwinkels α erfolgt wiederum ein Scan zur Variation der A-Ebenen durch Verschwenken allein um die Achse A6.

Die Figur 6 zeigt eine Variante des Ausführungsbeispiels der Figur 5 (mit α=-45°), bei der ein Abstrahlwinkel α von 0° eingestellt ist.

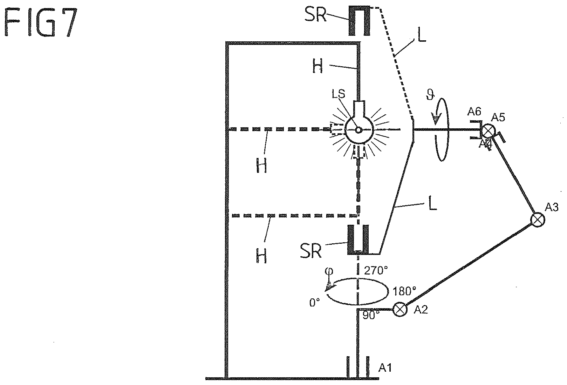

Die Figur 7 zeigt eine Konfiguration eines Sechs-Achsen-Schwenkarm-Roboters, bei der dieser ein Gonioradiometer vom Typ 4 realisiert. Ein solches dient der Ermittlung der Bestrahlungs- oder Beleuchtungsstärkeverteilung auf einer Kugeloberfläche, um daraus integrale Größen wie Strahlungsleistung oder Lichtstrom abzuleiten. Dabei ist der Lichtschwerpunkt LS der Strahlungsquelle S in der Mitte einer solchen Kugel in einer bestimmungsgemäßen Orientierung, z. B. stehend, hängend oder liegend gehaltert.

Bei der Ausgestaltung der Figur 7 ist mindestens ein Sensor SR vorgesehen, der mit einem Ausleger L verbunden ist, welcher auf der Achse A6 montiert ist. Figur 7 zeigt dabei den Sensor in 2 möglichen Positionen. Die Achse A6 ist dabei auf den Lichtschwerpunkt LS gerichtet. Des Weiteren sind die Sensor(en) SR jeweils derart ausgerichtet und an den Ausleger(n) L gehaltert, dass die optische Achse des jeweiligen Sensors SR unter einem Winkel von 90° zur Achse A6 verläuft. Der oder die Sensoren SR sind dabei derart angeordnet, dass sie bei einer Bewegung um die Achse A6 einen kompletten Großkreis abtasten können. In einer alternativen Ausgestaltung kann vorgesehen sein, dass zwei verschiedene Sensoren SR wie z.B. Fotometer und Spektralradiometer sehr eng zueinander auf einem Ausleger L platziert sind, um zwei unterschiedliche lichttechnische Größen gleichzeitig während einer Messung aufzunehmen.

Durch Verschwenken der Anordnung um die Achse A6 wird der Winkel θ (vgl. Figur 8) variiert und eine lichttechnische oder radiometrische Kenngröße entlang eines Großkreises gemessen. Alle anderen Achsen sind während dieser Messung starr. Nach Vermessen eines Großkreises wird im nächsten Schritt die Anordnung um die Achse A1 um einen Winkelschritt fortgeschaltet und der nächste Großkreis abgescannt, während alle anderen Achsen fest bleiben. Ein Verstellen um die Achse A1 erfolgt dabei entlang des Winkels ϕ, vgl. Figur 8.

In der Anordnung der Figur 7 ist wiederum eine Überkopfstellung des Roboters vorgesehen, wobei der Lichtschwerpunkt LS auf der Achse A1 liegt. Durch die Wahl der Überkopfstellung sind besonders große Kugelradien realisierbar.

Ein Vorteil der Ausgestaltung der Figur 7 liegt darin, dass man die Halterung H der Strahlungsquelle für einen stehenden, hängenden oder liegenden Betrieb nicht per Hohlwelle durch eine Achse zuführen muss, sondern dass die Halterung H aus jeder Richtung erfolgen kann. Dies ist durch die gestrichelten Halterungskonstruktionen H der Figur 7 angedeutet. Weiter wird darauf hingewiesen, dass durch Programmierung der Schatten der Lampenhalterung und damit auch diese selbst von der Bewegung des Sensors innerhalb der betroffenen Großkreise freigehalten werden kann, so dass es nicht zu Kollisionen kommt.

Die Erfindung ermöglicht somit die Realisierung unterschiedlicher Gonioradiometer der Typen 1.1, 1.2, 1.3 und 1.4 mit einem einzigen apparativen Aufbau, der einen Mehr-Achsen-Schwenkarm-Roboter umfasst. Die Achsen des Roboters sind dabei derart ausgerichtet, dass während eines Messvorgangs, der bevorzugt kontinuierlich durchgeführt wird, eine Rotation des Roboters um nur eine seiner Achsen erfolgt.

Die Erfindung beschränkt sich in ihrer Ausgestaltung nicht auf die vorstehend dargestellten Ausführungsbeispiele. Beispielsweise sind die in den Figuren dargestellten Achsen und Schwenkarmausrichtungen lediglich beispielhaft zu verstehen. Auch ist die Erfindung nicht auf die Verwendung eines Sechs-Achsen-Schwenkarm-Roboters beschränkt. Entsprechende Positionierungen können auch mit Schwenkarm-Robotern mit einer anderen Anzahl von Achsen realisiert werden.

## Patentansprüche

1. Verfahren zur richtungsabhängigen Messung mindestens einer photometrischen oder radiometrischen Kenngröße einer optischen Strahlungsquelle (S), wobei
- die Ausstrahlungsrichtung der photometrischen oder radiometrischen Kenngröße unter Verwendung eines Ebenensystems (A, B, C), dessen Ebenen sich in einer Schnittgeraden schneiden, die durch den Strahlungsschwerpunkt der Strahlungsquelle geht, und unter Verwendung eines Abstrahlwinkels (α, β, γ), der die Abstrahlrichtung (α, β, γ) innerhalb einer betrachteten Ebene angibt, beschrieben wird,
- jedem Messwert der photometrischen oder radiometrischen Kenngröße eine bestimmte Ebene des Ebenensystems (A, B, C) und ein bestimmter Abstrahlwinkel (α, β, γ) innerhalb dieser Ebene zugeordnet ist,
- die Messung mittels mindestens eines Sensors (SR) erfolgt, der geeignet ist, die Strahlung der Strahlungsquelle (S) zu messen, und
- entweder der Sensor (SR) oder die Strahlungsquelle (S) bei der Messung derart bewegt wird, dass der Sensor (SR) Messwerte aufnimmt, die die photometrische oder radiometrischen Kenngröße auf einer Kugeloberfläche um den Strahlungsschwerpunkt (LS) der Strahlungsquelle (S) angeben,
- wobei der Sensor (SR) oder die Strahlungsquelle (S) an einem Sechs-Achsen-Schwenkarm-Roboter befestigt ist,
**dadurch gekennzeichnet, dass**
- der Roboter während eines Messvorgangs, bei dem Messwerte erfasst werden, die unterschiedliche Abstrahlwinkel (α, β, γ) innerhalb einer betrachteten Ebene des Ebenensystems (A, B, C) oder unterschiedliche Ebenen bei einem betrachteten Abstrahlwinkel (α, β, γ) betreffen, um nur genau eine seiner Achsen (A1, A6) verschwenkt wird, nämlich um die erste Achse (A1) oder die sechste Achse (A6),
- zur Messung der photometrischen oder radiometrischen Kenngröße in einer anderen Ebene des Ebenensystems (A, B, C) oder bei einem anderen Abstrahlwinkel (α, β, γ) der Roboter in mindestens einer weiteren Schwenkachse (A5, A3) verstellt und der Roboter anschließend erneut um die genau eine Schwenkachse (A1, A6) verschwenkt wird,
- der Sensor (SR) oder die Strahlungsquelle (S) vor dem Verschwenken um die eine Schwenkachse (A1, A6) derart durch den Roboter positioniert wird, dass der Strahlungsschwerpunkt (LS) der Strahlungsquelle (S) auf der Schwenkachse (A1, A6) liegt.

2. Verfahren nach Anspruch 1, **dadurch gekennzeichnet, dass** der Roboter während des Verschwenkens zumindest über einzelne Winkelbereiche eine kontinuierliche Bewegung durchführt und der Sensor (SR) während dieser kontinuierlichen Bewegung kontinuierlich Messwerte aufnimmt.

3. Verfahren nach einem der vorangehenden Ansprüche, **dadurch gekennzeichnet, dass** durch Einstellen der Achsen (A1-A6) des Roboters die Messung wahlweise in einer der folgenden normierten Ebenensystemen erfolgt: in A-Ebenen mit Winkeln α, in B-Ebenen mit Winkeln β oder in C-Ebenen mit Winkeln γ, wobei die Winkel α, β, γ die Abstrahlrichtung innerhalb der jeweiligen Ebene angeben.

4. Verfahren nach einem der vorangehenden Ansprüche, **dadurch gekennzeichnet, dass** als photometrische oder radiometrische Kenngröße die Lichtstärkeverteilung, die Farbverteilung und/oder spektroradiometrische Informationen auf einer Kugeloberfläche um die Strahlungsquelle (S) gemessen werden.

5. Gonioradiometer zur richtungsabhängigen Messung mindestens einer photometrischen oder radiometrischen Kenngröße einer optischen Strahlungsquelle (S), welches aufweist:
- mindestens einen Sensor (SR), der geeignet ist, die Strahlung der Strahlungsquelle (S) zu messen,
- eine Vorrichtung zum Bewegen entweder des Sensors (SR) oder der Strahlungsquelle (S) bei einer Messung derart, dass der Sensor (SR) Messwerte aufnimmt, die die photometrische oder radiometrische Kenngröße auf einer Kugeloberfläche um den Strahlungsschwerpunkt (LS) der Strahlungsquelle (S) angeben, wobei
- die Ausstrahlungsrichtung der photometrischen Kenngröße unter Verwendung eines Ebenensystems (A, B, C), dessen Ebenen sich in einer Schnittgeraden schneiden, die durch den Strahlungsschwerpunkt der Strahlungsquelle (S) geht, und unter Verwendung eines Abstrahlwinkels (α, β, γ), der die Abstrahlrichtung (α, β, γ) innerhalb einer betrachteten Ebene angibt, beschrieben wird, und
- jedem Messwert der photometrischen oder radiometrischen Kenngröße eine bestimmte Ebene des Ebenensystems (A, B, C) und ein bestimmter Abstrahlwinkel (α, β, γ) innerhalb dieser Ebene zugeordnet ist, und
- die Vorrichtung zum Bewegen des Sensors (SR) oder der Strahlungsquelle (S) durch einen Sechs-Achsen-Schwenkarm-Roboter gebildet ist, an dem der Sensor (SR) oder die Strahlungsquelle (S) befestigt ist,
**dadurch gekennzeichnet,**
- **dass** der Sechs-Achsen-Schwenkarm-Roboter dazu vorgesehen und eingerichtet ist, seine Achsen (A1-A6) derart auszurichten, dass der Roboter während eines Messvorgangs, bei dem Messwerte erfasst werden, die unterschiedliche Abstrahlwinkel (α, β, γ) innerhalb einer betrachteten Ebene des Ebenensystems (A, B, C) oder unterschiedliche Ebenen bei einem betrachteten Abstrahlwinkel (α, β, γ) betreffen, um nur genau eine seiner Achsen (A1, A6) verschwenkt wird, nämlich um die erste Achse (A1) oder die sechste Achse (A6), und
- der Roboter dazu vorgesehen und eingerichtet ist, dass der Sensor (SR) oder die Strahlungsquelle (S) vor dem Verschwenken um die eine Schwenkachse (A1, A6) derart durch die anderen Achsen des Roboters positioniert ist, dass der Strahlungsschwerpunkt der Strahlungsquelle (S) auf der Schwenkachse (A1, A6) liegt.

6. Gonioradiometer nach Anspruch 5, **dadurch gekennzeichnet, dass** der Roboter dazu vorgesehen und eingerichtet ist, ein Gonioradiometer vom Typ 1 zu realisieren, wobei die Strahlungsquelle (S) am Roboter befestigt und bei einem Messvorgang bewegt wird.

7. Gonioradiometer nach Anspruch 6, **dadurch gekennzeichnet, dass** der Roboter dazu vorgesehen und eingerichtet ist, ein Gonioradiometer vom Typ 1.1 zu realisieren, wobei die Achsen (A1-A6) des Roboters derart ausgerichtet sind, dass während eines Messvorgangs, bei dem Messwerte erfasst werden, die unterschiedliche Abstrahlwinkel (α) innerhalb einer betrachteten Ebene des Ebenensystems (A) betreffen, der Roboter nur in seiner sechsten Achse (A6) verschwenkt wird, und dass zur Auswahl einer anderen Ebene des Ebenensystems (A) ein Verschwenken in der ersten Achse (A1) erfolgt.

8. Gonioradiometer nach Anspruch 6, **dadurch gekennzeichnet, dass** der Roboter dazu vorgesehen und eingerichtet ist, ein Gonioradiometer vom Typ 1.2 zu realisieren, wobei die Achsen (A1-A6) des Roboters derart ausgerichtet sind, dass während eines Messvorgangs, bei dem Messwerte erfasst werden, die unterschiedliche Abstrahlwinkel (β) innerhalb einer betrachteten Ebene des Ebenensystems (B) betreffen, der Roboter nur in seiner ersten Achse (A1) verschwenkt wird, und dass zur Auswahl einer anderen Ebene des Ebenensystems (B) ein Verschwenken in mindestens der fünften Achse (A5) erfolgt.

9. Gonioradiometer nach Anspruch 6, **dadurch gekennzeichnet, dass** der Roboter dazu vorgesehen und eingerichtet ist, ein Gonioradiometer vom Typ 1.3 zu realisieren, wobei die Achsen (A1-A6) des Roboters derart ausgerichtet sind, dass während eines Messvorgangs, bei dem Messwerte erfasst werden, die unterschiedliche Abstrahlwinkel (γ) innerhalb einer betrachteten Ebene des Ebenensystems (C) betreffen, der Roboter nur in seiner ersten Achse (A1) verschwenkt wird, und dass zur Auswahl einer anderen Ebene des Ebenensystems (C) ein Verschwenken in der sechsten Achse (A6) erfolgt.

10. Gonioradiometer nach Anspruch 6, **dadurch gekennzeichnet, dass** der Roboter dazu vorgesehen und eingerichtet ist, ein Gonioradiometer vom Typ 4 zu realisieren, wobei der mindestens eine Sensor (SR) am Roboter befestigt und bei einem Messvorgang bewegt wird, und wobei das Ebenensystem durch Ebenen gebildet wird, die durch den Mittelpunkt einer Kugel laufen, der durch den Strahlungsschwerpunkt der Strahlungsquelle gebildet ist.

11. Gonioradiometer nach Anspruch 10, **dadurch gekennzeichnet, dass** der Roboter dazu vorgesehen und eingerichtet ist, dass während eines Messvorgangs, bei dem Messwerte erfasst werden, die unterschiedliche Abstrahlwinkel innerhalb einer betrachteten Ebene des Ebenensystems betreffen, der Roboter nur in seiner sechsten Achse (A6) verschwenkt wird, und dass zur Auswahl einer anderen Ebene des Ebenensystems ein Verschwenken in der ersten Achse (A1) erfolgt.

12. Gonioradiometer nach einem der Ansprüche 5 bis 11, **dadurch gekennzeichnet, dass** der Roboter dazu eingerichtet ist, bei einem Verschwenken um genau eine seiner Achsen (A1, A6) während eines Messvorgangs eine kontinuierliche Bewegung auszuführen, und der Sensor (SR) dazu eingerichtet ist, während der kontinuierlichen Bewegung fortlaufend Messwerte aufzunehmen.

## Claims

1. Method for a directionally dependent measurement of at least one photometric or radiometric characteristic of an optical radiation source (S), wherein
- the emission direction of the photometric or radiometric characteristic is described by the use of a system of planes (A, B, C), the planes of which intersect at a line of intersection passing through the radiation centroid of the radiation source, and by the use of an emission angle (α, β, γ), which specifies the emission direction (α, β, γ) within a considered plane,
- a certain plane of the plane system (A, B, C) and a certain emission angle (α, β, γ) within this plane is assigned to each measurement value of the photometric or radiometric characteristic,
- the measurement is implemented by means of at least one sensor (SR), which is suitable for measuring the radiation of the radiation source (S), and
- either the sensor (SR) or the radiation source (S) is moved within the scope of the measurement such that the sensor (SR) records measurement values which specify the photometric or radiometric characteristic on a spherical surface around the radiation centroid (LS) of the radiation source (S),
- wherein the sensor (SR) or the radiation source (S) is attached to a six-axis articulated robot,
**characterized in that**
- the robot is swivelled only about exactly one of its axes (A1, A6), specifically about the first axis (A1) or the sixth axis (A6), within the scope of a measuring procedure during which measurement values are captured, which measurement values relate to the different emission angles (α, β, γ) within a considered plane of the system of planes (A, B, C) or different planes in the case of a considered emission angle (α, β, γ),
- the robot is adjusted in respect of at least one further swivel axis (A5, A3) and the robot is subsequently swivelled anew about the exactly one swivel axis (A1, A6) for the purposes of measuring the photometric or radiometric characteristic in a different plane of the system of planes (A, B, C) or in the case of the different emission angle (α, β. γ),
- the sensor (SR) or the radiation source (S) is positioned by the robot prior to swivelling about the one swivel axis (A1, A6) in such a way that the radiation centroid (LS) of the radiation source (S) is located on the swivel axis (A1, A6).

2. Method according to Claim 1, **characterized in that** the robot carries out a continuous movement during the swivelling through at least individual angle ranges and the sensor (SR) continuously records measurement values during this continuous movement.

3. Method according to either of the preceding claims, **characterized in that** adjusting the axes (A1-A6) of the robot selectively implements the measurement in one of the following normalized system of planes: in A-planes with angles α, in B-planes with angles β or in C-planes with angles γ, wherein the angles α, β, γ specify the emission direction within the respective plane.

4. Method according to any one of the preceding claims, **characterized in that** the luminous intensity distribution, the colour distribution and/or spectroradiometric information items are measured on a spherical surface around the radiation source (S) as a photometric or radiometric characteristic.

5. Gonioradiometer for a directionally dependent measurement of at least one photometric or radiometric characteristic of an optical radiation source (S), comprising
- at least one sensor (SR), which is suitable for measuring the radiation of the radiation source (S),
- an apparatus for moving either the sensor (SR) or the radiation source (S) during the scope of a measurement in such a way that the sensor (SR) records measurement values which specify the photometric or radiometric characteristic on a spherical surface around the radiation centroid (LS) of the radiation source (S), wherein
- the emission direction of the photometric characteristic is described by the use of a system of planes (A, B, C), the planes of which intersect at a line of intersection passing through the radiation centroid of the radiation source (S), and by the use of an emission angle (α, β, γ), which specifies the emission direction (α, β, γ) within a considered plane, and
- a certain plane of the plane system (A, B, C) and a certain emission angle (α, β, γ) within this plane is assigned to each measurement value of the photometric or radiometric characteristic, and
- the apparatus from moving the sensor (SR) or the radiation source (S) is formed by a six-axis articulated robot, to which the sensor (SR) or the radiation source (S) has been fastened,
**characterized**
- **in that** the six-axis articulated robot is provided and configured to align its axes (A1-A6) in such a way that the robot is swivelled only about exactly one of its axes (A1, A6), specifically about the first axis (A1) or the sixth axis (A6), within the scope of a measuring procedure during which measurement values are captured, which measurement values relate to the different emission angles (α, β, γ) within a considered plane of the system of planes (A, B, C) or different planes in the case of a considered emission angle (α, β, γ), and
- the robot is provided and configured in such a way that the sensor (SR) or the radiation source (S) is positioned by the other axes of the robot prior to swivelling about the one swivel axis (A1, A6) in such a way that the radiation centroid of the radiation source (S) is located on the swivel axis (A1, A6).

6. Gonioradiometer according to Claim 5, **characterized in that** the robot is provided and configured to realize a type 1 gonioradiometer, wherein the radiation source (S) is fastened to the robot and moved during a measuring procedure.

7. Gonioradiometer according to Claim 6, **characterized in that** the robot is provided and configured to realize a type 1.1 gonioradiometer, wherein the axes (A1-A6) of the robot are aligned in such a way that the robot is only swivelled about its sixth axis (A6) during a measuring procedure which captures measurement values that relate to different emission angles (α) within a considered plane of the system of planes (A) and that there is swivelling about a first axis (A1) for selecting a different plane of the system of planes (A).

8. Gonioradiometer according to Claim 6, **characterized in that** the robot is provided and configured to realize a type 1.2 gonioradiometer, wherein the axes (A1-A6) of the robot are aligned in such a way that the robot is only swivelled about its first axis (A1) during a measuring procedure which captures measurement values that relate to different emission angles (β) within a considered plane of the system of planes (B) and that there is swivelling about at least the fifth axis (A5) for selecting a different plane of the system of planes (B).

9. Gonioradiometer according to Claim 6, **characterized in that** the robot is provided and configured to realize a type 1.3 gonioradiometer, wherein the axes (A1-A6) of the robot are aligned in such a way that the robot is only swivelled about its first axis (A1) during a measuring procedure which captures measurement values that relate to different emission angles (γ) within a considered plane of the system of planes (C) and that there is swivelling about a sixth axis (A6) for selecting a different plane of the system of planes (A).

10. Gonioradiometer according to Claim 6, **characterized in that** the robot is provided and configured to realize a type 4 gonioradiometer, wherein the at least one sensor (SR) is fastened to the robot and moved during a measuring procedure and wherein the system of planes is formed by planes that extend through the centre of a sphere formed by the radiation centroid of the radiation source.

11. Gonioradiometer according to Claim 6, **characterized in that** the robot is provided and configured in such a way that the robot is swivelled only its sixth axis (A6) within the scope of a measuring procedure during which measurement values are captured, which measurement values relate to the different emission angles within a considered plane of the system of planes and that there is swivelling about the first axis (A1) for selecting a different plane of the system of planes.

12. Gonioradiometer according to any one of Claims 5 to 11, **characterized in that** the robot is configured to carry out a continuous movement during swivelling about exactly one of its axes (A1, A6) within the scope of a measuring procedure and the sensor (SR) is configured to continuously record measurement values during the continuous movement.

## Revendications

1. Procédé de mesure directionnelle d'au moins un paramètre photométrique ou radiométrique d'une source de rayonnement optique (S), dans lequel
- la direction de rayonnement du paramètre photométrique ou radiométrique est décrite en utilisant un système de plans (A, B, C) dont les plans se coupent au niveau d'une sécante qui passe par le barycentre de rayonnement de la source de rayonnement, et en utilisant un angle de rayonnement (α, β, γ) qui indique la direction de rayonnement (α, β, γ) à l'intérieur d'un plan donné,
- à chaque valeur de mesure du paramètre photométrique ou radiométrique sont associés un certain plan du système de plans (A, B, C) et un certain angle de rayonnement (α, β, γ) à l'intérieur de ce plan,
- la mesure est effectuée au moyen d'au moins un capteur (SR) qui est adapté pour mesurer le rayonnement de la source de rayonnement (S), et
- le capteur (SR) ou la source de rayonnement (S) est déplacé(e) lors de la mesure, le capteur (SR) enregistrant des valeurs de mesure qui indiquent le paramètre photométrique ou radiométrique sur une surface sphérique autour du barycentre de rayonnement (LS) de la source de rayonnement (S),
- dans lequel le capteur (SR) ou la source de rayonnement (S) est fixé (e) sur un robot six axes à bras articulé,
**caractérisé en ce que**
- pendant une opération de mesure lors de laquelle des valeurs de mesure sont détectées qui concernent les différents angles de rayonnement (α, β, γ) à l'intérieur d'un plan donné du système de plans (A, B, C) ou différents plans avec un angle de rayonnement donné (α, β, γ), le robot est amené à pivoter uniquement autour d'un de ses axes (A1, A6) exactement, notamment autour du premier axe (A1) ou du sixième axe (A6),
- pour la mesure du paramètre photométrique ou radiométrique dans un autre plan du système de plans (A, B, C) ou pour un autre angle de rayonnement (α, β, γ), le robot est réglé au niveau d'au moins un autre axe de pivotement (A5, A3), et ensuite le robot est à nouveau amené à pivoter autour dudit un axe de pivotement (A1, A6) exactement,
- le capteur (SR) ou la source de rayonnement (S) est positionné(e) par le robot avant le pivotement autour dudit un axe de pivotement (A1, A6) de telle sorte que le barycentre de rayonnement (LS) de la source de rayonnement (S) est situé sur l'axe de pivotement (A1, A6).

2. Procédé selon la revendication 1, **caractérisé en ce que** pendant le pivotement au moins sur des plages angulaires individuelles, le robot effectue au moins un mouvement continu et le capteur (SR) enregistre en continu des valeurs de mesure pendant ce mouvement continu.

3. Procédé selon l'une quelconque des revendications précédentes, **caractérisé en ce que** le réglage des axes (Al à A6) du robot permet d'effectuer la mesure au choix dans l'un des systèmes de plans normalisés suivants : dans des plans A ayant des angles α, dans des plans B ayant des angles β ou dans des plans C ayant des angles γ, les angles α, β, γ indiquant la direction de rayonnement à l'intérieur du plan respectif.

4. Procédé selon l'une quelconque des revendications précédentes, **caractérisé en ce que** la distribution d'intensité de lumière, la distribution de couleur et/ou des informations spectroradiométriques sur une surface sphérique autour de la source de rayonnement (S) sont mesurées comme paramètres photométriques ou radiométriques.

5. Gonioradiomètre pour la mesure directionnelle d'au moins un paramètre photométrique ou radiométrique d'une source de rayonnement optique (S), présentant :
- au moins un capteur (SR) qui est adapté pour mesurer le rayonnement de la source de rayonnement (S),
- un dispositif pour déplacer le capteur (SR) ou la source de rayonnement (S) lors d'une mesure de telle sorte que le capteur (SR) enregistre des valeurs de mesure qui indiquent le paramètre photométrique ou radiométrique sur une surface sphérique autour du barycentre de rayonnement (LS) de la source de rayonnement (S), dans lequel
- la direction de rayonnement du paramètre photométrique est décrite en utilisant un système de plans (A, B, C) dont les plans se coupent au niveau d'une sécante qui passe par le barycentre de rayonnement de la source de rayonnement (S), et en utilisant un angle de rayonnement (α, β, γ) qui indique la direction de rayonnement (α, β, γ) à l'intérieur d'un plan donné, et
- à chaque valeur de mesure du paramètre photométrique ou radiométrique sont associés un certain plan du système de plans (A, B, C) et un certain angle de rayonnement (α, β, γ) à l'intérieur de ce plan, et
- le dispositif permettant de déplacer le capteur (SR) ou la source de rayonnement (S) est formé par un robot six axes à bras articulé sur lequel est fixé (e) le capteur (SR) ou la source de rayonnement (S),
**caractérisé en ce que**
- le robot six axes à bras articulé est prévu et aménagé pour orienter ses axes (Al à A6) de telle sorte que pendant une opération de mesure lors de laquelle des valeurs de mesure sont détectées qui concernent différents angles de rayonnement (α, β, γ) à l'intérieur d'un plan donné du système de plans (A, B, C) ou différents plans pour un angle de rayonnement donné (α, β, γ), le robot est amené à pivoter uniquement autour d'un de ses axes (A1, A6) exactement, notamment autour du premier axe (A1) ou du sixième axe (A6), et
- le robot est prévu et aménagé pour qu'avant le pivotement autour dudit un axe de pivotement (A1, A6) le capteur (SR) ou la source de rayonnement (S) soit positionné (e) par les autres axes du robot de telle sorte que le barycentre de rayonnement de la source de rayonnement (S) est situé sur l'axe de pivotement (A1, A6) .

6. Gonioradiomètre selon la revendication 5, **caractérisé en ce que** le robot est prévu est aménagé pour réaliser un gonioradiomètre de type 1, dans lequel la source de rayonnement (S) est fixée sur le robot et déplacée lors d'une opération de mesure.

7. Gonioradiomètre selon la revendication 6, **caractérisé en ce que** le robot est prévu et aménagé pour réaliser un gonioradiomètre de type 1.1, dans lequel les axes (Al à A6) du robot sont orientés de telle sorte que pendant une opération de mesure lors de laquelle des valeurs de mesure sont détectées qui concernent différents angles de rayonnement (α) à l'intérieur d'un plan donné du système de plans (A), le robot n'est amené à pivoter qu'au niveau de son sixième axe (A6), et un pivotement du premier axe (A1) est effectué pour sélectionner un autre plan du système de plans (A).

8. Gonioradiomètre selon la revendication 6, **caractérisé en ce que** le robot est prévu et aménagé pour réaliser un gonioradiomètre de type 1.2, dans lequel les axes (Al à A6) du robot sont orientés de telle sorte que pendant une opération de mesure lors de laquelle des valeurs de mesure sont détectées qui concernent différents angles de rayonnement (β) à l'intérieur d'un plan donné du système de plans (B), le robot n'est amené à pivoter qu'au niveau de son premier axe (A1), et un pivotement au niveau d'au moins le cinquième axe (A5) est effectué pour la sélection d'un autre plan du système de plans (B).

9. Gonioradiomètre selon la revendication 6, **caractérisé en ce que** le robot est prévu et aménagé pour réaliser un gonioradiomètre de type 1.3, dans lequel les axes (A1 à A6) du robot sont orientés de telle sorte que pendant une opération de mesure lors de laquelle des valeurs de mesure sont détectées qui concernent différents angles de rayonnement (γ) à l'intérieur d'un plan donné du système de plans (C), le robot n'est amené à pivoter qu'au niveau de son premier axe (A1), et un pivotement au niveau du sixième axe (A6) est effectué pour la sélection d'un autre plan du système de plans (C).

10. Gonioradiomètre selon la revendication 6, **caractérisé en ce que** le robot est prévu et aménagé pour réaliser un gonioradiomètre de type 4, dans lequel ledit au moins un capteur (SR) est fixé sur le robot et est déplacé lors d'une opération de mesure, et dans lequel le système de plans est formé par des plans qui passent par le centre d'une sphère qui est formé par le barycentre de rayonnement de la source de rayonnement.

11. Gonioradiomètre selon la revendication 10, **caractérisé en ce que** le robot est prévu et aménagé pour que pendant une opération de mesure lors de laquelle des valeurs de mesure sont détectées qui concernent différents angles de rayonnement à l'intérieur d'un plan donné du système de plans, le robot ne soit amené à pivoter qu'au niveau de son troisième axe (A6), et pour qu'un pivotement soit effectué au niveau du premier axe (A1) pour la sélection d'un autre plan du système de plans.

12. Gonioradiomètre selon l'une quelconque des revendications 5 à 11, **caractérisé en ce que** lors d'un pivotement autour d'un de ses axes (A1, A6) exactement, le robot est aménagé pour effectuer un mouvement continu pendant une opération de mesure, et le capteur (SR) est aménagé pour enregistrer en continu des valeurs de mesure pendant le déplacement continu.
